# EUROPEAN PATENT SPECIFICATION

(11) **EP 3 181 401 B1**
(45) Date of publication and mention of the grant of the patent: **30.03.2022**
(21) Application number: 15382622.7
(22) Date of filing: 15.12.2015
(51) Int. Cl.: B60Q 1/00, B60Q 1/26, F21S 43/14, F21S 43/239, F21S 43/243, F21S 43/245, F21S 43/249, F21S 43/20, B29C 45/16

(54) **ILLUMINATION DEVICE FOR A MOTOR VEHICLE**
BELEUCHTUNGSVORRICHTUNG FÜR EIN KRAFTFAHRZEUG
DISPOSITIF D'ÉCLAIRAGE POUR UN VÉHICULE AUTOMOBILE

(43) Date of publication of application: 21.06.2017
(73) Proprietor: VOLKSWAGEN AKTIENGESELLSCHAFT, 38440 Wolfsburg (DE); VALEO ILUMINACION, S.A., 23600 Martos (ES)
(72) Inventor: GEYER, CHRISTOPH, 38547 Wettmershagen (DE); ROMAN, JUAN ANDRES, 23600 Martos (ES)
(74) Representative: Isern Patentes y Marcas S.L.

(56) References cited:
- WO-A1-2011/104615
- DE-A1-102006 059 980
- DE-A1-102009 011 948
- DE-A1-102011 014 262
- DE-A1-102011 110 630
- DE-A1-102012 015 057
- JP-A- 2013 037 963

## Description

The invention relates to an illumination device for a motor vehicle.

Such an illumination device is known from JP 2013 037963 A. This document describes especially a headlamp. The headlamp contains a lower beam lamp and a high beam lamp. Thereunder are arranged three pillar-shaped light guide elements, whereby the light guide elements are used as daytime running lamps and as turnsignal lamp. The light guide elements are of transparent material and are optically separeted by opaque shading elements of optical impermeability. The light of light sources is coupled in an end of each light guide element and is emitted on a front side face. The light guide elements and the shading elements are integrally formed by two color molding, whereby the shading elements merge into holding parts, thus simplifying a fixing structure for the illumination device. Furthermore, an illumination device is known from WO 2009/074510 A1.

Additionally, document DE 10 2011 014262 A1 discloses a further illumination device for a motor vehicle

In the illumination device disclosed therein, multiple transparent elements are each equipped with different optical indices of refraction and are integrally connected to one another via a multipart plastic injection-moulding method.

Light is coupled into one of the transparent elements transversely to a light main emission direction. The coupled-in light can be decoupled from the transparent element again at specific points and can fulfil, for example, a light function such as brake light, parking light, indicator light, or daytime running light.

In this way, various signal functions are to be executable using optical waveguides and a cost-effective and compact construction is to be enabled, wherein at the same time new design possibilities of the illumination device are enabled.

DE 10 2006 059980 A1 discloses an illumination device for a motor vehicle, the illumination device having at least two transparent elements and at least one light emitting light source, the light of which is conducted through the transparent elements and decoupled therefrom in at least one light main emission direction, wherein the transparent elements are optically separated from one another transversely to the at least one light main emission direction by at least one opaque element, wherein the illumination device has at least one end-side light entry surface and at least one end-side light exit surface of the transparent elements, opposite to the at least one end-side light entry surface, for decoupling the light in at least one light main emission direction and therewith implementing at least one light function; and wherein at least one further external surface of the respective transparent element, from which light is decoupled at least regionally, is arranged between these surfaces to provide the background illumination of the transparent elements, wherein the at least one light function is selected among at least one of the following: a brake light, a travel direction indicator.

The present invention is based on the object of providing an alternative illumination device for a motor vehicle, using which multiple light functions can also be implemented, wherein in particular a more compact construction is enabled.

The present object is achieved by the features of Patent Claim 1. Claim 7 refers to the method for producing such an illumination device and Claim 10 to a motor vehicle having at least one such an illumination device. Advantageous refinements or embodiments of the invention can be inferred from the dependent claims.

The present invention proceeds in this case from an illumination device for a motor vehicle, having at least two transparent elements and at least one light-emitting light source. The light thereof can be conducted through the transparent elements and decoupled therefrom at least in a light main emission direction.

The transparent elements are optically

separated from one another transversely to the at least one light main emission direction by at least one opaque (i.e., light non-transmissive) element. Both the transparent elements and the at least one opaque element are integrally connected to one another. In other words, the transparent elements and the opaque element are permanently materially bonded with one another.

In this manner, it is made possible to provide an illumination device having multiple light functions, which can be compactly constructed and is simple to produce.

Each of the transparent elements can be used in this case to implement a specific light function, wherein a reliable optical separation of the light beams conducted through each of the transparent elements and therefore a reliable functional separation of the light functions is enabled by the opaque element.

The light main emission direction is to be understood in this case as the emission direction of the light coupled into the transparent elements, which is necessary at least to ensure a specific light function (for example, taillight, brake light, indicator light) for road users travelling in front of or behind a motor vehicle. The light main emission direction will therefore generally be located essentially in or opposite to the typical travel direction of a motor vehicle.

Light secondary emission directions are to be delimited therefrom, which directions are also to reach road users located laterally or at an angle to a motor vehicle, and are legally required, to enable a prescribed light distribution and therefore a comprehensive visibility of the motor vehicle.

The illumination device may be formed particularly compactly if, according to an embodiment of the invention, the transparent elements are formed as planar and are optically separated from one another, at least transversely to the light main emission direction, by at least one opaque, substantially planar element.

In this case, "planar" in the meaning of the invention indicates that the thickness of an element is small in relation to its area extension in the width or length. In other words, the area extension of a planar element is multiple times greater than its thickness. The planar element does not have to be flat in this case, i.e., formed like a plate. Rather, it can also be curved per se.

An optical separation of the transparent elements by at least one opaque element transversely to the light main emission direction can also comprise in this case an optical separation essentially perpendicularly to the light main emission direction, but does not have to.

The transparent elements and/or the at least one opaque element are preferably flat or curved.

According to another refinement of the invention, the at least one opaque element is connected to at least one further planar, wall-like opaque element, which extends perpendicularly from the at least one opaque element and optically separates two transparent elements from one another.

Firstly, this contributes to a plurality of light functions being cleanly separable from one another, and secondly, the production of the illumination device can thus be made easier.

The opaque element is preferably to be formed in a white or black colour. If one of these colours is selected, specific, special optical effects can be achieved. However, the use of other colours, colour mixtures, or also the use of greyscales is also conceivable.

A very special light effect is achieved by the illumination device according to the invention having at least one end-side light entry surface and at least one end-side light exit surface of the transparent elements opposite to the light entry surface, for decoupling the light in at least one light main emission direction and therewith implementing at least one light function. At one further external surface of the respective transparent element, from which light is diffusely decoupled at least regionally, is arranged between these two surfaces, approximately perpendicular to these surfaces. This can be used, for example, during a braking procedure to form a special optical effect. The at least one light function is selected among at least one of the following: a brake light, a travel direction indicator, a reversing light, and a fog taillight. At least part of the at least one external surface protrudes from the motor vehicle, when the illumination device is mounted to the vehicle.

To achieve a further, appealing optical effect, the at least one further external surface can be at least regionally provided with an opaque layer. The opaque layer can be an aluminium vapour deposition, for example, so that the opaque layer appears as a glossy silver or matte silver layer.

Plastic is preferably selected as the material for the illumination device, i.e., for the transparent elements. In this case, the materials PMMA (polymethyl methacrylate) or also PC (polycarbonate) are preferably usable.

The transparent elements are preferably formed as colourless. However, it is also conceivable to pigment them, for example, red or also yellow. This is dependent on which light function is to be implemented and which colour the light sources can generate.

Light-emitting diodes (LEDs) or organic light-emitting diodes (OLEDs) are preferably to be used as light sources. The use of such light sources contributes to a compact construction of the illumination device.

However, the invention also relates to a method for producing an illumination device according to the invention.

In this case, the illumination device is produced by means of a multicomponent injection-moulding method in a mould, and specifically using the listed, successive method steps:
Firstly, at least one first cavity of the mould is filled using a transparent plastic, wherein the at least one cavity is formed as planar having an area extension.

After sufficient cooling of the transparent plastic in the first cavity, a second cavity is formed in the mould in a second method step. The second cavity is also formed as planar having an area extension and completely overlaps the first cavity, which is filled using the transparent plastic, at least perpendicularly to the area extension thereof.

The second cavity is preferably formed in that an upper part of the mould is removed and a new upper part having an enlarged interior is put on again.

In a following method step, the second cavity is filled using an opaque plastic.

After sufficient cooling of the opaque plastic, the upper part of the mould is again removed and replaced by another upper part having enlarged interior. In this way, a third cavity is formed in the mould. The third cavity is also formed as planar having an area extension and also completely overlaps the second cavity, which is filled using the opaque plastic, at least perpendicularly to the area extension.

Finally, in a further method step, the third cavity is in turn filled using a transparent plastic.

By way of such a method, the transparent elements can be brought integrally into a permanent engagement with the opaque element. In addition, a very compact construction of the illumination device is possible.

Therefore, at least two transparent elements are optically separated from one another by an opaque element using the method according to the invention.

Notwithstanding this, it is conceivable that more than two transparent elements are optically separated from one another by one or more opaque elements. This is dependent on the number of the light functions to be implemented.

By way of appropriate arrangement of the light entry surface and the light exit surface of the transparent elements, these are formed as optical waveguides. The light passes through the light entry surface into the transparent elements and is conducted through these with total reflection up to the light exit surface.

In one embodiment of the method according to the invention, the third cavity can at least regionally have a structured internal surface.

In this way, a further external surface, which is located between the light entry surface and the light exit surface of the respective transparent element, can be formed having those regions from which light can be diffusely decoupled. This enables additional optical effects.

The structured surface in the third cavity may preferably be implemented in that the inner side of the upper part of the mould at least regionally has a structured or roughened internal surface. During the filling of the third cavity, the internal surface thereof is then reproduced as the structured surface of the created transparent element.

To generate a further optical effect, according to another embodiment of the method according to the invention, the injection-moulded part removed from the mould is regionally covered using a mask and an opaque layer, preferably in the form of an aluminium vapour deposition, is applied to the noncovered regions.

Finally, a motor vehicle, which has at least one illumination device according to the invention, is also to be placed under protection by the present invention.

Such a motor vehicle can be refined such that it comprises two U-shaped illumination units, which laterally enclose an oblong, planar illumination device between them like parentheses, wherein the oblong, planar illumination device extends at least over a majority of the width of the motor vehicle and at least the U-shaped illumination units protrude like wings or spoilers from the motor vehicle with an area extension in or opposite to the travel direction.

A motor vehicle having such features can create an extremely noticeable appearance, linked with a high level of signalling effect. This also certainly contributes to increasing the traffic safety.

Another, extremely advantageous refinement proposes that the motor vehicle has at least two illumination devices according to the invention, which form an intermediate space between them and are accommodated by a cover element. A housing of a further illumination device is accommodated in a remaining region of the intermediate space. The cover element additionally has a demoulding direction, which is opposite to a demoulding direction of the housing of the further illumination device.

During the production of plastic components in the injection-moulding method, they are provided with a required demoulding angle α in the order of magnitude of preferably approximately 3°. The demoulding direction is to be understood in this case as the direction in which a demoulding angle opens or, in other words, in which a component provided with a demoulding angle conically grows because of the angle.

The above-mentioned refinement contributes to a compact structural height of the illumination arrangement on the motor vehicle in a vehicle vertical direction.

Preferred exemplary embodiments of the invention are illustrated in the drawings and are explained in greater detail in the following description. In this case, identical reference signs refer to identical, comparable, or functionally identical components, wherein corresponding or comparable properties and advantages are achieved, even if a repeated description is omitted.

In the schematic figures:
- Figure 1: shows an illumination device according to the invention in a view according to view I from Figure 3, which corresponds to a rear view in a mounted state of the illumination device on the motor vehicle,
- Figure 2: shows the illumination device according to the invention from the inner side according to view II from Figure 1,
- Figure 3: shows the illumination device according to the invention from the outer side according to view III from Figure 1,
- Figure 4: shows a method for producing the illumination device according to the invention, wherein five method steps are illustrated,
- Figure 5: shows a detail illustration according to view V from Figure 4,
- Figure 6: shows a view of the rear of a motor vehicle, which is equipped with multiple illumination devices according to the invention,
- Figure 7: shows a view of the motor vehicle according to view VII from Figure 6, and
- Figure 8: shows a view according to sectional view VIII from Figure 6.

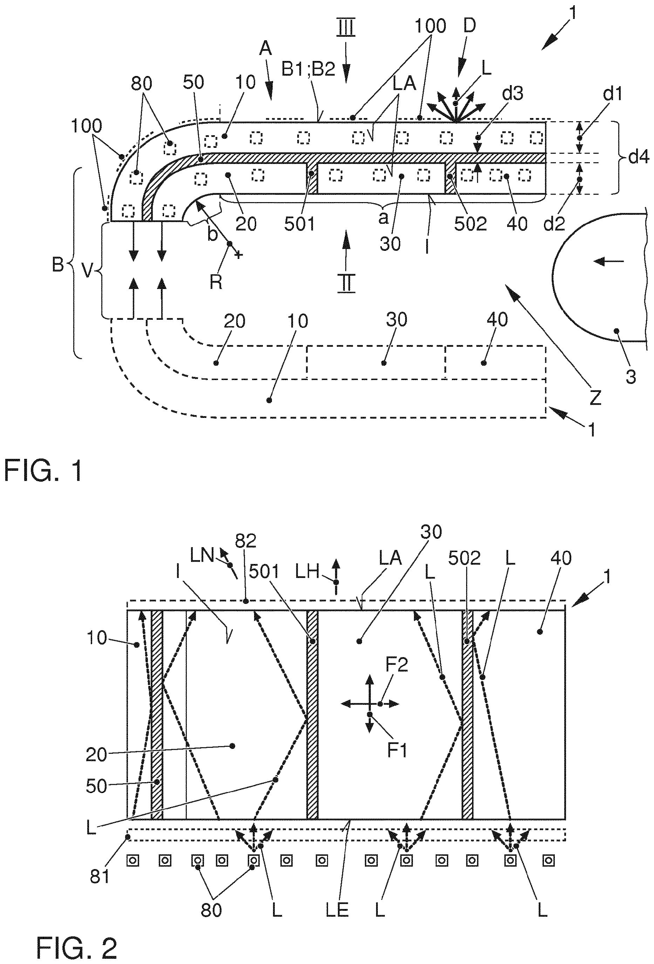

Reference is firstly made to Figures 1 to 3 in the following description.

An illumination device 1 is shown in the figures. The illumination device 1 comprises a first transparent element 10, a second transparent element 20, a third transparent element 30, and a fourth transparent element 40.

The transparent elements 10 to 40 are used as optical waveguides, which conduct light L from light sources 80 via an end-side light entry surface LE up to an end-side light exit surface LA opposite to the light entry surface LE. Light coupling is thus performed in the direction of a light main emission direction LH. A light secondary emission direction is identified as an example with LN.

The light sources 80 are preferably formed as light-emitting diodes (LEDs).

An external surface A, which is approximately perpendicular to these surfaces, is formed between the light entry surface LE and the light exit surface LA.

As is apparent, the transparent elements 10 to 40 are optically separated from one another by an opaque element 50 or opaque elements 501 and 502, which protrude perpendicularly therefrom.

In this way, it is ensured that light beams L, which are each conducted through a transparent element 10, 20, 30, or 40, cannot enter another of the transparent elements 10 to 40.

This is illustrated as an example on the basis of the light beams L indicated by dashed lines in the transparent elements, which are reflected on the opaque elements 50, 501, or 502, respectively, and therefore remain inside the respective transparent element.

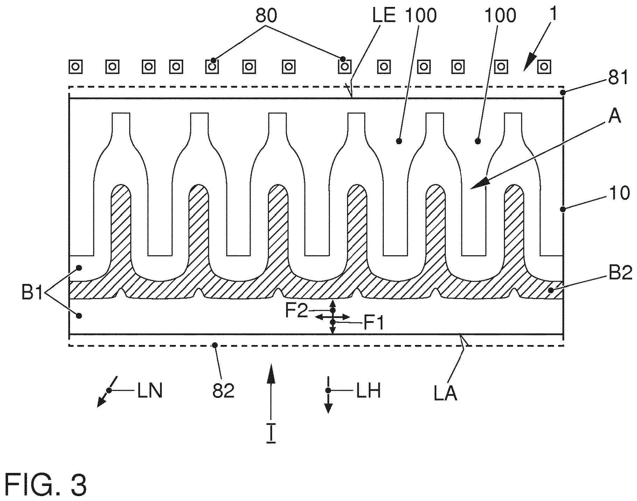

Furthermore, an input optical system 81 and an output optical system 82 are indicated by dashed lines in Figures 2 and 3. The input optical system 81 can be a Fresnel and/or collimator optical system, for example. These are used for "capturing" the light emitted from the light sources 80 and aligning it as well as possible in the direction toward the light entry surface LE.

The output optical system 82 is a scattering optical system, preferably a cushion optical system. It is used to deflect the light exiting from the light exit surface LA as needed in different directions, to meet legal requirements for light values.

F1 identifies an area extension of the transparent and opaque elements in the light main emission direction LH and F2 identifies such an area extension perpendicular to the light main emission direction LH.

As is apparent on the basis of the figures, each of the transparent elements 10 or 20 to 40 has a thickness d1 or d2, respectively, which is multiple times less than the area extensions F1 or F2. The transparent elements 10 to 40 are therefore formed as planar.

The opaque element 50, which separates the transparent element 10 from the transparent elements 20 to 40, is also formed as planar. It has a thickness d3, which is multiple times less than the area extension F1 or F2 thereof.

The opaque elements 501 and 502, which extend perpendicularly from the opaque element 50, have approximately the same thickness as the opaque element 50.

In the exemplary embodiment, the thicknesses d1 and d2 are formed as approximately equal and are preferably each approximately 4 to 5 mm. In contrast, the thickness d3 of the opaque element 50 is preferably approximately 2 mm. The area extension F1 is approximately 200 mm and the area extension F2 is approximately 400 mm.

Overall, the illumination device 1 is therefore also still to be considered to be planar, since the resulting thickness d4 of the illumination device 1 is still multiple times less than the area extensions F1 or F2.

In the profile visible in Figure 1, the illumination device 1 has a long, linear section a and a shorter, curved section b, which adjoins thereon, having a radius R.

A first illumination device 1 can therefore be combined with a second, structurally identical illumination device 1 (indicated by dashed lines) to form an illumination unit B, which is U-shaped in profile. Two illumination devices 1 can be joined together via a connecting region V (not shown in greater detail) in the region of the end-side ends thereof on the curved section b.

The connection can be performed, for example, via laser welding, gluing, or also by a formfitting or latching connection.

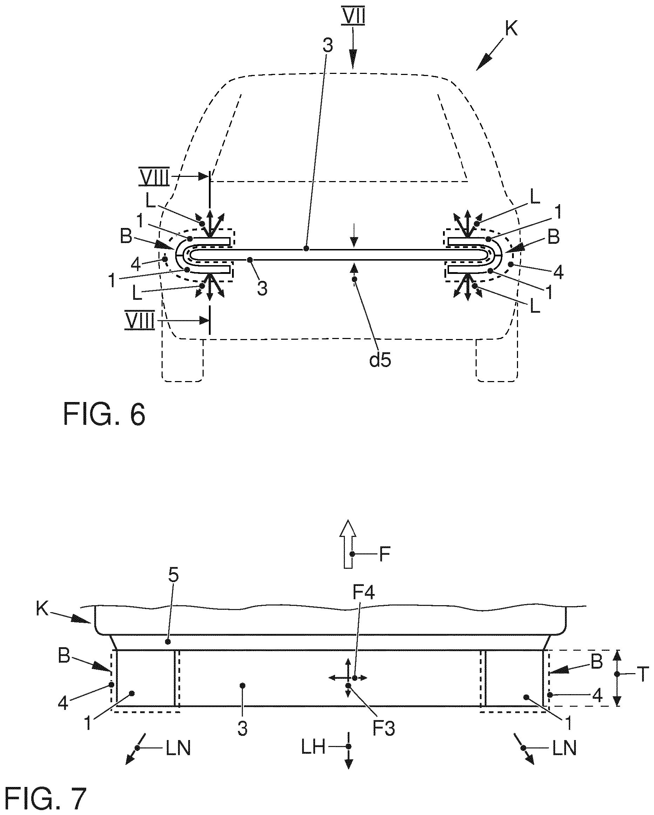

After connecting two structurally identical illumination devices 1, an intermediate clearance space Z is formed between internal surfaces I of the illumination devices 1. The intermediate space Z can be used to partially accommodate an illumination device 3 and a cover element 4 for the illumination devices 1, which is not shown in this figure for the sake of comprehensibility (however, cf. Figure 6).

To be able to fulfil the light functions defined by the illumination device 1, a specific light function is assigned to each of the transparent elements 10 to 40.

Thus, the function of a brake light is assigned to the transparent element 10, the function of an indicator light (travel direction indicator) is assigned to the transparent element 20, the function of a reversing light is assigned to the transparent element 30, and the function of a fog taillight is assigned to the transparent element 40.

The generation of the correspondingly required colours (red and yellow) can be brought about by the use of corresponding colour filters, for example, in the region of the light exit surface LA (not shown in greater detail) or also by way of suitable activation of colour-capable, light-emitting diodes (RGB LEDs).

A perfect functional separation of the implemented light functions may be achieved as a result of the optical separation of the transparent elements 10 to 40 transversely to the light main emission direction LH.

Since the illumination device 1 is produced from plastic in a multicomponent injection-moulding method, which will be described in greater detail, the transparent elements 10 to 40 are connected to the opaque elements 50, 501, and 502 integrally in a permanent engagement. The opaque elements 50, 501, and 502 are also integrally connected to one another.

The illumination device 1 may therefore be produced very compactly.

Notwithstanding the exemplary embodiment, however, it is conceivable not to form the transparent and opaque elements as planar elements. The essential aspect of the invention is the optical separation of multiple transparent elements by at least one opaque element, to thus be able to reliably separate the light functions assigned to the transparent elements from one another.

It is recognizable from Figure 3 that opaque regions 100 are applied to the external surface A of the transparent element 10. The opaque regions 100 have a bottle-like shape and are preferably formed as matte silver or glossy silver.

The opaque regions 100 stand out slightly from the external surface A of the transparent element 10. The creation thereof will be described in greater detail hereafter.

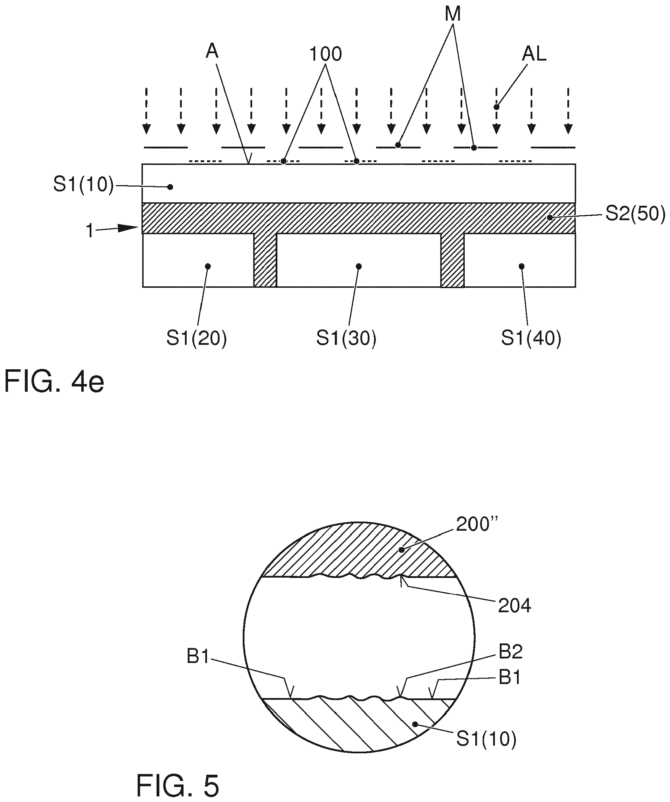

The external surface A of the transparent element 10 which is not covered by the opaque regions 100 may be divided into a smooth region B1 and a roughened or matte region B2. The region B2 protrudes like fingers into intermediate spaces between the opaque regions 100 and is used, as a result of a structuring created during the production (cf. also Figure 5), for the diffuse decoupling D of light L outward, which is indicated at one point as an example in Figure 1. In other words, a hemisphere can be imagined over each surface point of the region B2, wherein the light L is decoupled in every spatial angle of such a hemisphere.

Notwithstanding the illustrated exemplary embodiment, an illumination device is also conceivable which has fewer or more than four transparent elements, which are optically separated from one another by at least one opaque element. However, at least two transparent elements are to be created, which are optically separated from one another by at least one opaque element.

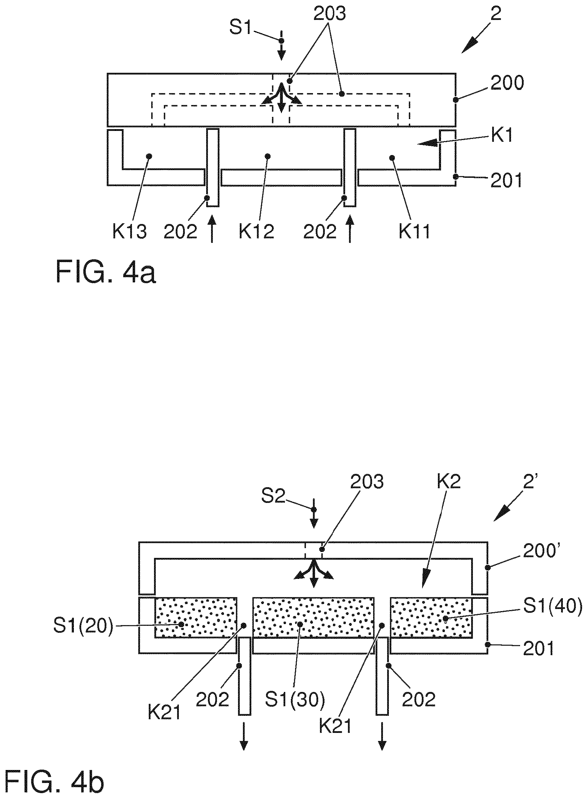

A method is described hereafter on the basis of Figures 4a to 4e, using which the illumination device 1 according to the invention can be produced. As already mentioned, the illumination device 1 is produced in a multicomponent injection-moulding method.

In this case, a mould 2, which consists essentially of a replaceable mould upper part 200 and a mould lower part 201 is used (cf. Figure 4a).

A cavity K1 is formed by the mould upper part 200 together with the mould lower part 201. In addition, the mould lower part 201 has two openings, through which the slide elements 202 are pushed up to the mould upper part 200. The slide elements 202 divide the cavity K1 into three cavities K11, K12 and K13. Supply channels for injection-moulding material which is used are identified with 203.

Since the cavity K1 or the cavities K11 to K13 have to represent a negative of the transparent elements 20, 30, and 40 to be created, it is apparent that the cavity K1 or the cavities K11 to K13 have to have nearly the same dimensions as the transparent elements 20, 30, and 40. The cavity K1 or K11 to K13 are therefore also formed as planar having a corresponding area extension.

In a first method step, the cavities K11 to K13 are now filled using a first injection-moulding material S1.

The injection-moulding material S1 is colourless and transparent and is supplied to the mould 2 via an extruder (not shown) connected upstream, in which the injection-moulding material is heated to flowing temperature.

The already filled state of the cavities K11 to K13 in a mould 2' is shown in Figure 4b, wherein in addition the mould upper part 200 has been replaced with another mould upper part 200'.

As is apparent, the later transparent elements 20, 30, and 40 are formed by the filled cavities K11 to K13.

Furthermore, the slide elements 202 are retracted out of the mould lower part 201 and release two cavities K21.

A cavity K2 is now formed by the mould upper part 200', which merges seamlessly into the cavities K21.

Since the second cavity K2 has to represent a negative of the opaque element 50, the second cavity K2 is also formed as planar having an area extension. The second cavity K2 completely overlaps the first cavity K1, which is filled using the first injection-moulding material S1, or the transparent elements 20, 30, and 40, respectively, at least perpendicularly to the area extension thereof.

In a further method step, a second injection-moulding material S2, which is opaque, is supplied to the mould 2' in the above-described manner. In this way, the cavities K2 and K21 are completely filled. The injection-moulding material S2 is preferably white or black.

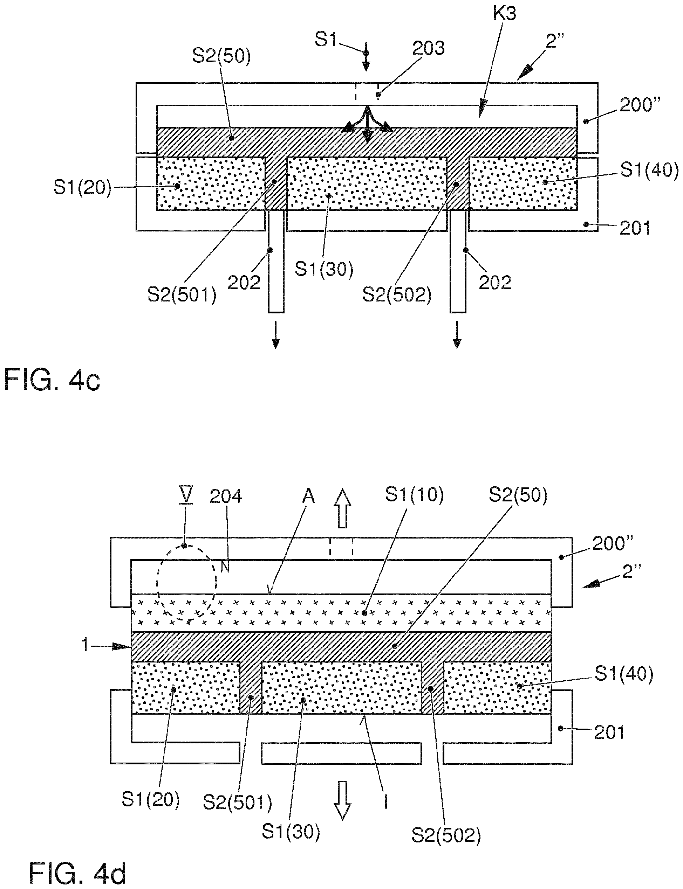

The filled state is apparent in Figure 4c, wherein the opaque elements 50, 501, and 502 (cf. also Figure 1) have resulted due to the filling using the injection-moulding material S2.

During the injection-moulding procedure, the injection-moulding material S2 permanently bonds to the injection-moulding material S1, which is already located in the mould lower part 201.

In Figure 4c, the mould upper part 200' has been replaced once again by another mould upper part 200" and a mould 2" has thus been formed. In this way, the mould 2" has a third cavity K3.

Since the cavity K3 represents a negative of the transparent element 10, the cavity K3 is also formed as planar having an area extension.

The cavity K3 also completely overlaps the cavity K2, which is filled with the injection-moulding material S2, i.e., the opaque plastic, at least perpendicularly to the area extension thereof.

Finally, the injection-moulding material S1 (transparent plastic) is again supplied to the mould 2" until the cavity K3 is completely filled.

In this case, the injection-moulding material S1 again permanently bonds to the injection-moulding material S2.

After a specific cooling time, the mould upper part 200" and the mould lower part 201 can be separated from one another, so that the created workpiece, namely the illumination device 1, can be removed from the mould 2".

It is to be mentioned in this case that the third cavity K3 at least regionally has a structured surface. Specifically, for this purpose the mould upper part 200" is at least regionally provided with a roughened or structured internal surface 204. During the filling of the third cavity K3, the surface structure of the internal surface 204 is therefore transferred to the external surface A of the injection-moulding material S1 or of the later transparent element 10 and the above-mentioned region B2 is thus created (cf. also Figure 5).

It is to be mentioned here that for the sake of simplicity of the drawing, in Figure 4, the shape of the cavities K1 to K3 and K11 to K13 and K21 does not exactly correspond to the shape of the elements 10 to 50. This is also not necessary for the comprehension of the invention.

The workpiece (the illumination device 1) removed from the mould 2" therefore has the colourless transparent elements 10 to 40, which are optically separated from one another by the opaque element 50 or 501 and 502. In addition, the external surface A of the transparent element 10 has the smooth region B1 and the roughened or matte region B2. The region B2 can therefore be used as a decoupling surface for light beams.

Notwithstanding the outlined production procedure, it is also conceivable not to already create the region B2 by corresponding surface composition of the mould 200", but rather by a correspondingly subsequent surface processing of the external surface A.

A further, possible method step will now be described on the basis of Figure 4e.

In this method step, the external surface A of the transparent element 10 is regionally covered using a mask M. The surface A is subsequently vapour-deposited using aluminium AL.

In this way, opaque regions 100 result, which can appear glossy silver or matte silver (cf. also Figures 1 and 3).

It will now be described on the basis of Figures 6 and 7 how multiple illumination devices 1 can be formed into a larger illumination unit on the rear of a motor vehicle K.

Thus, in each case two illumination devices 1 have been joined together to form a U-shaped illumination unit B in the rear region of the motor vehicle K. Each illumination unit B encloses the lateral end of one illumination device 3 between it like parentheses.

As can be seen, the illumination device 3 is also formed as an oblong, planar element having an area extension F3 pointing in a conventional travel direction F and an area extension F4 pointing perpendicularly thereto.

The illumination device 3 performs the function of a taillight and extends at least over a majority of the width of the motor vehicle K; in the exemplary embodiment, the illumination device 3 has an area extension F4 of approximately 1500 mm.

The thickness d5 of the illumination device 3 is multiple times less than the area extension F4 or also F3 thereof.

The illumination units B and the illumination device 3 are connected to the motor vehicle K via a housing 5.

It is apparent on the basis of Figure 7 that both the illumination units B and the illumination device 3 protrude with a depth T from the motor vehicle K like a wing or spoiler opposite to the travel direction F. In the exemplary embodiment, the depth T is preferably approximately 200 mm.

Furthermore, according to the view from Figure 6, a U-shaped, transparent cover element 4 is indicated by dashed lines in the figures, using which the illumination units B are covered. The cover element 4 functions as a light lens.

Notwithstanding the exemplary embodiment, it is also conceivable that only the illumination units B protrude like a wing from the motor vehicle K. The entire remainder of the illumination device 3 is preferably completely enclosed on the top and bottom in this case by a rear vehicle body or bumper region, so that only an end-side light exit surface of the illumination device 3 is still visible.

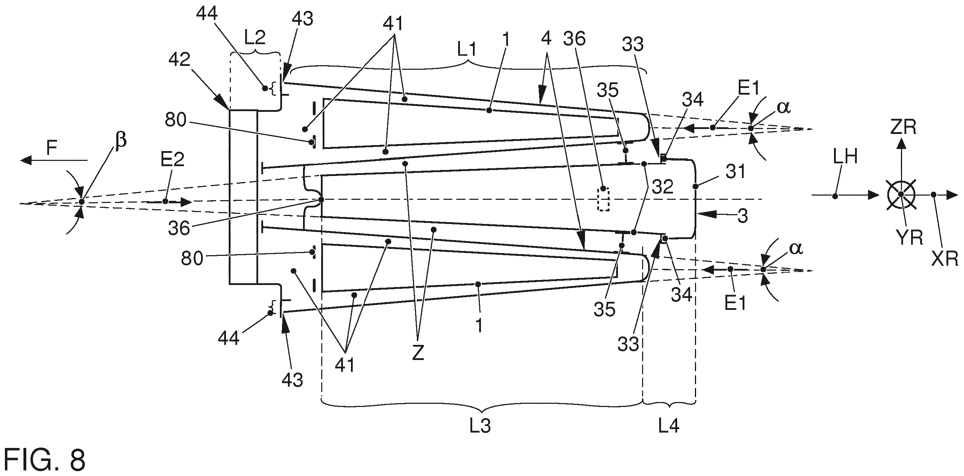

Finally, it will be explained on the basis of Figure 8 how the illumination units B are covered by the cover element 4 and how the illumination device 3 is arranged in relation to the cover element 4. XR identifies a vehicle longitudinal direction, YR identifies a vehicle transverse direction, and ZR identifies a vehicle vertical direction.

It is thus apparent that the illumination devices 1 are each completely accommodated by a receptacle space 41 of the cover element 4. The receptacle space 41 is covered on the rear side by a housing 42. The connection between the housing 42 and the cover element 4 is implemented on an outer, linear connecting region 43 via a laser weld. For this purpose, the housing 42 is formed as dark but transparent at least in a region 44. In this manner, during the production of the connection, laser beams (not shown), which are oriented on the rear of the region 44, can penetrate this region and reach the connecting region 43 of the cover element 4. A very fine, but durable connection can be created by laser-related fusion of the contacting materials in the connecting region 43. Furthermore, it is noticeable that the cover element 4, viewed in the vehicle longitudinal direction XR or in the travel direction F, has a longitudinal direction L1, which is multiple times greater than a longitudinal extension L2 of the housing 42.

In addition, the cover element 4 is provided with a demoulding angle a, which is required for the production procedure in plastic injection moulding, in the order of magnitude of preferably approximately 3°.

The demoulding direction is to be understood in this case as the direction in which a demoulding angle opens or, in other words, in which a component provided with a demoulding angle conically grows because of the angle.

In the exemplary embodiment, the cover element 4 has a demoulding direction E1 pointing to the left, i.e., in the travel direction F.

The illumination device 3 is accommodated in the intermediate space Z remaining between the illumination devices 1. Said device has a housing 32, which is provided with a demoulding angle β, also in the order of magnitude of preferably approximately 3°. The housing 32 has a demoulding direction E2, which is opposite to the demoulding direction E1, i.e., points opposite to the travel direction F.

The housing 32 is covered by a transparent light lens 31. In contrast to the connecting region 43, this light lens is glued to the housing 32 by an adhesive 34, which is present in an adhesive channel 33 of the housing 32. Spacers 35 are arranged between the housing 32 and the cover element 4. Illuminants in the form of light-emitting diodes are indicated by the reference sign 36.

Furthermore, it can be recognized that the housing 32 has a longitudinal extension L3, which is multiple times greater than a longitudinal extension L4 of the light lens 31. This is thus just the reverse of the case of the cover element 4 and the associated housing 42.

In the mounting state, the housing 32 is completely accommodated by the cover element 4 or in the intermediate space Z.

The fact that the demoulding directions E1 and E2 are additionally oriented in opposite directions can contribute to a compact structural height of the illustrated illumination arrangement in the vehicle vertical direction ZR.

The invention is not restricted to the above exemplary embodiment or embodiments. These were only used for the general explanation of the core concept of the invention. Rather, in the scope of protection thereof, the invention can also assume other than the above-described exemplary embodiments or designs. The scope of protection is defined only by the appended claims.

### LIST OF REFERENCE NUMERALS

- 1: illumination device
- 2 , 2', 2": mould
- 3: illumination device
- 4: U-shaped cover element
- 5: housing
- 10: transparent element
- 20: transparent element
- 30: transparent element
- 31: light lens
- 32: housing
- 33: adhesive channel
- 34: adhesive
- 35: spacer
- 36: illuminant
- 40: transparent element
- 41: receptacle space
- 42: housing
- 43: connecting region
- 44: dark, transparent region
- 50: opaque element
- 80: light sources
- 81: intake optical system (Fresnel, collimator optical system)
- 82: output optical system (cushion optical system)
- 100: opaque regions
- 200, 200', 200": mould upper part
- 201: mould lower part
- 202: slide elements
- 203: supply channels
- 204: internal surface of a mould upper part
- 501: opaque element
- 502: opaque element

- α: demoulding angle
- β: demoulding angle
- a: linear section
- b: curved section
- B: illumination unit
- A: external surface
- AL: aluminium
- B1: smooth region of the external surface
- B2: roughened or matte region of the external surface
- d1-d5: thicknesses
- D: diffuse decoupling of light
- E1: demoulding direction
- E2: demoulding direction
- F: travel direction
- F1-F4: area extensions
- I: internal surface
- K: motor vehicle
- K1-K3: cavities
- K21: cavities
- L: light beams
- L1-L4: longitudinal extensions
- LA: light exit surface
- LE: light entry surface
- LH: light main emission direction
- LN: light secondary emission direction
- M: mask
- R: radius
- S1: first injection-moulding material (transparent)
- S2: second injection-moulding material (opaque)
- T: depth
- V: connecting region
- Z: intermediate clearance space
- XR: vehicle longitudinal direction
- YR: vehicle transverse direction
- ZR: vehicle vertical direction

## Claims

1. Ilumination device (1) for a motor vehicle (K), the illumination device (1) having at least two transparent elements (10, 20, 30, 40) and at least one light (L) emitting light source (80), the light (L) of which is conducted through the transparent elements (10, 20, 30, 40) and decoupled therefrom in at least one light main emission direction (LH),
wherein the transparent elements (10, 20, 30, 40) are optically separated from one another transversely to the at least one light main emission direction (LH) by at least one opaque element (50, 501, 502), wherein both the transparent elements (10, 20, 30, 40) and the at least one opaque element (50, 501, 502) are integrally connected to one another;
wherein the illumination device (1) has at least one end-side light entry surface (LE) and at least one end-side light exit surface (LA) of the transparent elements (10, 20, 30, 40), opposite to the at least one end-side light entry surface (LE),
for decoupling the light (L) in at least one light main emission direction (LH) and therewith implementing at least one light function; and
wherein at least one further external surface (A) of the respective transparent element (10, 20, 30, 40), from which light (L) is diffusely decoupled at least regionally, is arranged between these surfaces (LE, LA) approximately perpendicular to these surfaces (LE, LA);
wherein the at least one light function is selected among at least one of the following:
a brake light, a travel direction indicator, a reversing light, and a fog taillight; wherein least part of the at least one further external surface (A) protrudes from the motor vehicle (K), when the illumination device (1) is mounted to the vehicle (K).

2. Ilumination device (1) according to claim 1, **characterized in that** the at least one main light emission direction (LH) comprises a light main emission direction (LH) located in an intended travel direction of the motor vehicle (K), or opposite to the the travel direction, when the illumination device (1) is mounted to the vehicle (K).

3. Illumination device (1) according to Claim 1 or 2, **characterized in that** the transparent elements (10, 20, 30, 40) are formed as planar and are optically separated from one another, at least transversely to the light main emission direction (LH), by the at least one opaque, essentially planar, element (50, 501, 502).

4. Illumination device (1) according to anyone of Claims 1-3, **characterized in that** the transparent elements (10, 20, 30, 40) and/or the at least one opaque element (50, 501, 502) are flat or curved.

5. Illumination device (1) according to any one of the preceding claims, **characterized in that** the at least one opaque element (50) is connected at least to a further planar, wall-like opaque element (501, 502), which extends perpendicularly from the at least one opaque element (50) and optically separates two transparent elements (20, 30 or 30, 40) from one another.

6. Illumination device (1) according to any one of the preceding claims, **characterized in that** the at least one further external surface is at least regionally provided with an opaque layer (100).

7. Method for producing an illumination device (1) according to any one of Claims 1 to 6, wherein it is produced by means of a multicomponent injection-moulding method in a mould (2,2', 2"), having the following method steps:
filling at least one first cavity (K1) of the mould (2) using a transparent plastic (S1), wherein the at least one cavity (K1) is formed as planar having an area extension,
- forming a second cavity (K2) in the mould (2'), wherein the second cavity (K2) is also formed as planar having an area extension and completely overlaps the first cavity (K1), which is filled using the transparent plastic (S1), at least perpendicularly to the area extension thereof,
- filling the second cavity (K2) using an opaque plastic (S2),
- forming at least one third cavity (K3) in the mould (2"), wherein the third cavity (K3) is also formed as planar having an area extension and completely overlaps the second cavity (K2), which is filled using the opaque plastic (S2), at least perpendicularly to the area extension thereof,
- filling the third cavity (K3) using a transparent plastic (S1).

8. Method according to Claim 7, **characterized in that** the third cavity (K3) at least regionally has a structured internal surface (204).

9. Method according to Claim 7 or 8, **characterized in that** the injection-moulded part removed from the mould (2") is regionally covered using a mask (M) and an opaque layer (100) is applied to the noncovered regions.

10. Motor vehicle (K) having at least one illumination device (1) according to any one of Claims 1 to 6.

11. Motor vehicle (K) according to Claim 10, **characterized in that** it comprises two structurally identical illumination devices (1) combined to each other to form an illumination unit (B), which is U-shaped in profile,
the motor vehicle (K) comprising two of the U-shaped illumination units (B), which laterally enclose an oblong, planar illumination device (3) between them like parentheses, wherein the oblong, planar illumination device (3) extends at least over a majority of the width of the motor vehicle (K) and at least the U-shaped illumination units (B) protrude like wings or spoilers from the motor vehicle (K) with an area extension (F3) in or opposite to a travel direction (F).

12. Motor vehicle (K) according to Claim 10 or 11, **characterized in that** at least two illumination devices (1) form an intermediate space (Z) between them and are accommodated by a cover element (4), wherein a housing (32) of a further illumination device (3) is accommodated in a remaining region of the intermediate space (Z) and the cover element (4) has a demoulding direction (E1), which is opposite to a demoulding direction (E2) of the housing (32) of the further illumination device (3).

## Patentansprüche

1. Beleuchtungsvorrichtung (1) für ein Kraftfahrzeug (K), wobei die Beleuchtungsvorrichtung (1) mindestens zwei transparente Elemente (10, 20, 30, 40) und mindestens eine Licht (L) emittierende Lichtquelle (80) aufweist, deren Licht (L) durch die transparenten Elemente (10, 20, 30, 40) geleitet wird und davon in mindestens einer Lichthauptemissionsrichtung (LH) entkoppelt wird,
wobei die transparenten Elemente (10, 20, 30, 40) quer zur mindestens einen Lichthauptemissionsrichtung (LH) durch mindestens ein lichtundurchlässiges Element (50, 501, 502) optisch voneinander getrennt sind, wobei sowohl die transparenten Elemente (10, 20, 30, 40) als auch das mindestens eine lichtundurchlässige Element (50, 501, 502) einstückig miteinander verbunden sind;
wobei die Beleuchtungsvorrichtung (1) mindestens eine stirnseitige Lichteintrittsfläche (LE) und mindestens eine stirnseitige Lichtaustrittsfläche (LA) der transparenten Elemente (10, 20, 30, 40), gegenüberliegend mindestens einer stirnseitigen Lichteintrittsfläche (LE) aufweist,
zum Auskoppeln des Lichts (L) in mindestens einer Lichthauptemissionsrichtung (LH) und damit zum Implementieren mindestens einer Lichtfunktion; und
wobei mindestens eine weitere Außenfläche (A) des jeweiligen transparenten Elements (10, 20, 30, 40), aus der Licht (L) mindestens bereichsweise diffus ausgekoppelt wird, zwischen diesen Flächen (LE, LA) ungefähr senkrecht zu diesen Flächen (LE, LA) angeordnet ist;
wobei die mindestens eine Lichtfunktion aus mindestens einem der Folgenden ausgewählt ist: einem Bremslicht, einem Fahrtrichtungsanzeiger, einem Rückfahrlicht und einem Nebelschlusslicht;
wobei mindestens ein Teil der mindestens einen weiteren Außenfläche (A) von dem Kraftfahrzeug (K) vorsteht, wenn die Beleuchtungsvorrichtung (1) am Fahrzeug (K) montiert ist.

2. Beleuchtungsvorrichtung (1) nach Anspruch 1, **dadurch gekennzeichnet, dass** die mindestens eine Hauptlichtemissionsrichtung (LH) eine Lichthauptemissionsrichtung (LH) umfasst, die in einer vorgesehenen Fahrtrichtung des Kraftfahrzeugs (K) oder entgegen der Fahrtrichtung liegt, wenn die Beleuchtungsvorrichtung (1) am Fahrzeug (K) montiert ist.

3. Beleuchtungsvorrichtung (1) nach Anspruch 1 oder 2, **dadurch gekennzeichnet, dass** die transparenten Elemente (10, 20, 30, 40) planar ausgebildet und mindestens quer zur Lichthauptemissionsrichtung (LH) durch das mindestens eine lichtundurchlässige, im Wesentlichen planare Element (50, 501, 502) optisch voneinander getrennt sind.

4. Beleuchtungsvorrichtung (1) nach einem der Ansprüche 1-3, **dadurch gekennzeichnet, dass** die transparenten Elemente (10, 20, 30, 40) und/oder das mindestens eine lichtundurchlässige Element (50, 501, 502) flach oder gekrümmt sind.

5. Beleuchtungsvorrichtung (1) nach einem der vorstehenden Ansprüche, **dadurch gekennzeichnet, dass** das mindestens eine lichtundurchlässige Element (50) mindestens mit einem weiteren planaren, wandartigen lichtundurchlässigen Element (501, 502) verbunden ist, das sich senkrecht von dem mindestens einen lichtundurchlässigen Element (50) erstreckt und zwei transparente Elemente (20, 30 oder 30, 40) optisch voneinander trennt.

6. Beleuchtungsvorrichtung (1) nach einem der vorstehenden Ansprüche, **dadurch gekennzeichnet, dass** die mindestens eine weitere Außenfläche (A) mindestens bereichsweise mit einer lichtundurchlässigen Schicht (100) versehen ist.

7. Verfahren zum Herstellen einer Beleuchtungsvorrichtung (1) nach einem der Ansprüche 1 bis 6, wobei sie mittels eines Mehrkomponenten-Spritzgießverfahrens in einer Form (2,2', 2") hergestellt wird, mit den folgenden Verfahrensschritten:
- Füllen mindestens eines ersten Hohlraums (K1) der Form (2) mit einem transparenten Kunststoff (S1), wobei der mindestens eine Hohlraum (K1) planar mit einer Flächenausdehnung ausgebildet ist,
- Bilden eines zweiten Hohlraums (K2) in der Form (2'), wobei der zweite Hohlraum (K2) ebenfalls planar mit einer Flächenausdehnung ausgebildet ist und den mit dem transparenten Kunststoff (S1) gefüllten ersten Hohlraum (K1) mindestens senkrecht zu dessen Flächenausdehnung vollständig überlappt,
- Füllen des zweiten Hohlraums (K2) mit einem undurchsichtigen Kunststoff (S2),
- Bilden mindestens eines dritten Hohlraums (K3) in der Form (2"), wobei der dritte Hohlraum (K3) ebenfalls planar mit einer Flächenausdehnung ausgebildet ist und den mit dem lichtundurchlässigen Kunststoff (S2) gefüllten zweiten Hohlraum (K2) mindestens senkrecht zu dessen Flächenausdehnung vollständig überlappt,
- Füllen des dritten Hohlraums (K3) mit einem transparenten Kunststoff (S1).

8. Verfahren nach Anspruch 7, **dadurch gekennzeichnet, dass** der dritte Hohlraum (K3) mindestens bereichsweise eine strukturierte Innenfläche (204) aufweist.

9. Verfahren nach Anspruch 7 oder 8, **dadurch gekennzeichnet, dass** das aus der Form (2") entfernte Spritzgussteil unter Verwendung einer Maske (M) bereichsweise abgedeckt und eine lichtundurchlässige Schicht (100) auf die nicht abgedeckten Bereiche aufgebracht wird.

10. Kraftfahrzeug (K) mit mindestens einer Beleuchtungsvorrichtung (1) nach einem der Ansprüche 1 bis 6.

11. Kraftfahrzeug (K) nach Anspruch 10, **dadurch gekennzeichnet, dass** es zwei baugleiche Beleuchtungsvorrichtungen (1) umfasst, die zu einer im Profil U-förmigen Beleuchtungseinheit (B) miteinander kombiniert sind,
wobei das Kraftfahrzeug (K) zwei der U-förmigen Beleuchtungseinheiten (B) umfasst, die seitlich eine längliche, planare Beleuchtungsvorrichtung (3) zwischen ihnen wie Klammern einschließen, wobei sich die längliche, planare Beleuchtungsvorrichtung (3) mindestens über einen Großteil der Breite des Kraftfahrzeugs (K) erstreckt und mindestens die U-förmigen Beleuchtungseinheiten (B) kotflügel- oder spoilerartig vom Kraftfahrzeug (K) mit einer Flächenausdehnung (F3) in oder entgegen einer Fahrtrichtung (F) vorstehen.

12. Kraftfahrzeug (K) nach Anspruch 10 oder 11, **dadurch gekennzeichnet, dass** mindestens zwei Beleuchtungsvorrichtungen (1) zwischen sich einen Zwischenraum (Z) bilden und von einem Abdeckelement (4) aufgenommen sind, wobei in einem verbleibenden Bereich des Zwischenraums (Z) ein Gehäuse (32) einer weiteren Beleuchtungsvorrichtung (3) aufgenommen ist und das Abdeckelement (4) eine Entformungsrichtung (E1) aufweist, die einer Entformungsrichtung (E2) des Gehäuses (32) der weiteren Beleuchtungsvorrichtung (3) entgegengesetzt ist.

## Revendications

1. Dispositif d'éclairage (1) pour un véhicule automobile (K), le dispositif d'éclairage (1) ayant au moins deux éléments transparents (10, 20, 30, 40) et au moins une source lumineuse (80) émettant de la lumière (L), dont la lumière (L) est conduite à travers les éléments transparents (10, 20, 30, 40) et découplée de celle-ci dans au moins une direction d'émission principale de lumière (LH), dans lequel les éléments transparents (10, 20, 30, 40) sont optiquement séparés les uns des autres transversalement à l'au moins une direction d'émission principale de lumière (LH) par au moins un élément opaque (50, 501, 502), dans lequel autant les éléments transparents (10, 20, 30, 40) que l'au moins un élément opaque (50, 501, 502) sont intégralement reliés l'un à l'autre ;
dans lequel le dispositif d'éclairage (1) a au moins une surface d'entrée de lumière (LE) du côté de l'extrémité et au moins une surface de sortie de lumière (LA) du côté de l'extrémité des éléments transparents (10, 20, 30, 40), à l'opposé de l'au moins une surface d'entrée de lumière (LE) du côté de l'extrémité,
pour découpler la lumière (L) dans au moins une direction d'émission principale de lumière (LH) et mettre ainsi en œuvre au moins une fonction lumineuse ; et dans lequel au moins une autre surface externe (A) de l'élément transparent respectif (10, 20, 30, 40), à partir de laquelle la lumière (L) est découplée de manière diffuse au moins par endroits, est disposée entre ces surfaces (LE, LA) approximativement perpendiculaire à ces surfaces (LE, LA) ;
dans lequel l'au moins une fonction d'éclairage est sélectionnée parmi au moins l'une des fonctions suivantes : un feu de freinage, un indicateur de direction de déplacement, un feu de recul et un feu antibrouillard arrière ;
dans lequel au moins une partie de l'au moins une autre surface externe (A) fait saillie du véhicule à moteur (K), lorsque le dispositif d'éclairage (1) est monté sur le véhicule (K).

2. Dispositif d'éclairage (1) selon la revendication 1, **caractérisé en ce que** l'au moins une direction d'émission principale de lumière (LH) comprend une direction d'émission principale de lumière (LH) située dans une direction de déplacement prévue du véhicule à moteur (K), ou opposée à la direction de déplacement, lorsque le dispositif d'éclairage (1) est monté sur le véhicule (K).

3. Dispositif d'éclairage (1) selon la revendication 1 ou 2, **caractérisé en ce que** les éléments transparents (10, 20, 30, 40) sont réalisés sous forme plane et sont optiquement séparés les uns des autres, au moins transversalement à la direction d'émission principale de lumière (LH), par l'au moins un élément opaque, essentiellement plan, (50, 501, 502).

4. Dispositif d'éclairage (1) selon l'une quelconque des revendications 1-3, **caractérisé en ce que** les éléments transparents (10, 20, 30, 40) et/ou l'au moins un élément opaque (50, 501, 502) sont plans ou incurvés.

5. Dispositif (1) selon l'une quelconque des revendications précédentes, **caractérisé en ce que** l'au moins un élément opaque (50) est relié au moins à un autre élément opaque plan, en forme de paroi (501, 502), qui s'étend perpendiculairement à partir de l'au moins un élément opaque (50) et sépare optiquement deux éléments transparents (20, 30 ou 30, 40) l'un de l'autre.

6. Dispositif (1) selon l'une quelconque des revendications précédentes, **caractérisé en ce que** l'au moins une autre surface externe (A) est pourvue au moins par endroits d'une couche opaque (100).

7. Procédé de fabrication d'un dispositif d'éclairage (1) selon l'une quelconque des revendications 1 à 6, dans lequel celui-ci est fabriqué au moyen d'un procédé de moulage par injection à plusieurs composants dans un moule (2, 2', 2"), ayant les étapes de procédé suivantes :
- le remplissage d'au moins une première cavité (K1) du moule (2) en utilisant un plastique transparent (S1), dans lequel l'au moins une cavité (K1) est réalisée sous forme plane ayant une extension de zone,
- la formation d'une deuxième cavité (K2) dans le moule (2'), dans lequel la deuxième cavité (K2) est également réalisée sous forme plane ayant une extension de zone et recouvrant complètement la première cavité (K1), qui est remplie en utilisant du plastique transparent (S1), au moins perpendiculairement à l'extension de zone de celle-ci,
- le remplissage de la deuxième cavité (K2) en utilisant un plastique opaque (S2),
- la formation d'au moins une troisième cavité (K3) dans le moule (2"), dans lequel la troisième cavité (K3) est également réalisée sous forme plane ayant une extension de zone et recouvrant complètement la deuxième cavité (K2), qui est remplie en utilisant du plastique opaque (S2), au moins perpendiculairement à l'extension de zone de celle-ci,
- remplissage de la troisième cavité (K3) en utilisant un plastique transparent (S1).

8. Procédé selon la revendication 7, **caractérisé en ce que** la troisième cavité (K3) a au moins par endroits une surface interne structurée (204).

9. Procédé selon la revendication 7 ou 8, **caractérisé en ce que** la pièce moulée par injection retirée du moule (2") est recouverte par endroits en utilisant un masque (M) et une couche opaque (100) est appliquée sur les endroits non recouverts.

10. Véhicule automobile (K) ayant au moins un dispositif d'éclairage (1) selon l'une quelconque des revendications 1 à 6.

11. Véhicule automobile (K) selon la revendication 10, **caractérisé en ce qu'**il comprend deux dispositifs d'éclairage (1) structurellement identiques combinés l'un à l'autre pour former une unité d'éclairage (B), qui a un profil en forme de U, le véhicule automobile (K) comprenant deux des unités d'éclairage en forme de U (B), qui renferment latéralement un dispositif d'éclairage plan, oblong, (3) entre elles comme des parenthèses, dans lequel le dispositif d'éclairage plan, oblong, (3) s'étend au moins sur une majorité de la largeur du véhicule à moteur (K) et au moins les unités d'éclairage en forme de U (B) font saillie comme des ailes ou des ailerons du véhicule à moteur (K) avec une extension de zone (F3) dans ou à l'opposé d'une direction de déplacement (F).

12. Véhicule automobile (K) selon la revendication 10 ou 11, **caractérisé en ce qu'**au moins deux dispositifs d'éclairage (1) forment entre eux un espace intermédiaire (Z) et sont logés par un élément de recouvrement (4), dans lequel un boîtier (32) d'un autre dispositif d'éclairage (3) est logé dans un endroit restant de l'espace intermédiaire (Z) et l'élément de recouvrement (4) a une direction de démoulage (E1), qui est opposée à une direction de démoulage (E2) du boîtier (32) de l'autre dispositif d'éclairage (3).
